# FASCICULE DE BREVET EUROPEEN

(11) **EP 0 553 240 B1**
(45) Date de publication et mention de la délivrance du brevet: **22.02.1995**
(21) Numéro de dépôt: 91919573.5
(22) Date de dépôt: 14.10.1991
(51) Int. Cl.: B29C 45/44

(54) **MOULE D'INJECTION PLASTIQUE POUR LA FABRICATION DE LUNETTES DECOREES**
FORM ZUM SPRITZGIESSEN VON KUNSTSTOFF ZUR HERSTELLUNG DEKORIERTER BRILLEN
PLASTIC INJECTION MOULD FOR THE MANUFACTURE OF DECORATED GLASSES

(30) Priorité: 15.10.1990 FR 9012690
(43) Date de publication de la demande: 04.08.1993
(73) Titulaire: O AND O, 49100 Angers (FR)
(72) Inventeur: SOULEZ LARIVIERE, Maurille, F-92190 Meudon (FR)
(74) Mandataire: Dawidowicz, Armand
(86) Numéro de dépôt international: FR9100798
(87) Numéro de publication internationale: WO9206835

(56) Documents cités:
- FR-A- 1 332 122
- US-A- 3 104 425
- US-A- 3 387 334
- SOVIET INVENTIONS ILLUSTRATED Section CH, week 8443, 5 December 1984, Derwent Publications Ltd., London GB & SU-A-1077808 (MEDOBORUDOVANIE) 7 March 1984

## Description

L'invention concerne un moule d'injection plastique pour la fabrication de lunettes décorées par la technique dite du film dans le moule, ledit moule comportant une partie fixe et une partie mobile séparées par un plan de joint.

Le procédé connu par FR.A-2.459.116, de film dans le moule consiste à faire défiler dans le plan de joint du moule un film décoré qui, au cours de l'injection, est transféré dans la matière injectée transparente, translucide ou opaque. Ce procédé connu implique que le film ne doit être ni déformé ni troué par le passage de pièces mécaniques au cours de l'injection.

Dans l'injection des façades de lunettes, deux plaquettes de rainage, destinées à la formation des rainures ou drageoirs pour le montage des verres, sont montées mobiles dans le moule afin de permettre l'éjection de la pièce moulée (voir US-A-3.387.334).

Lorsque les plaquettes sont montées dans la partie fixe du moule, elles sont articulées sur un axe mobile et traversées par des éjecteurs, et une buse d'injection, de sorte que ces saillies s'opposent à l'utilisation de la technique du film dans le moule. Il en est de même lorsque les plaquettes sont montées dans la partie mobile du moule.

La présente invention vise en conséquence à fournir un nouveau moule d'injection permettant d'appliquer la technique du film dans le moule pour la fabrication de façades de lunettes décorées.

A cet effet, le moule selon l'invention est caractérisé en ce qu'il comporte deux plaquettes de rainage mobiles qui sont chacune montées pivotantes sur un coulisseau disposé dans la partie fixe du moule, chacune desdites plaquettes étant soumise à l'action d'une butée à ressort logée dans la partie fixe du moule, ainsi qu'à des moyens de rappel en position d'injection préalablement à la fermeture du moule, l'injection de matière se faisant par un canal disposé dans la partie fixe du moule et débouchant entre les deux plaquettes, des éjecteurs étant montés dans la partie fixe du moule.

Grâce au moule selon l'invention, tous les systèmes mécaniques sont déplacés dans la partie fixe du moule sans dépasser le plan de joint du moule. Ce n'est qu'à l'ouverture du moule, après injection, que la sortie des plaquettes de rainage sépare les portions du film à l'intérieur des rainures, la façade étant ensuite éjectée par des éjecteurs se trouvant à l'extérieur de ces rainures.

De préférence, les éjecteurs sont situés sous les tenons de la façade de lunette. Avantageusement, les butées à ressort sont des butées à bille.

Le moule selon l'invention permet donc d'obtenir en un temps très court le déchaussage des plaquettes de rainage par pivotement sur le coulisseau qui se déplace à l'ouverture du moule, avec séparation simultanée des portions de film se trouvant à l'intérieur des deux rainures, et l'éjection de la façade de lunette.

L'invention sera bien comprise à la lecture de la description suivante faite en se référant au dessin annexé dans lequel :

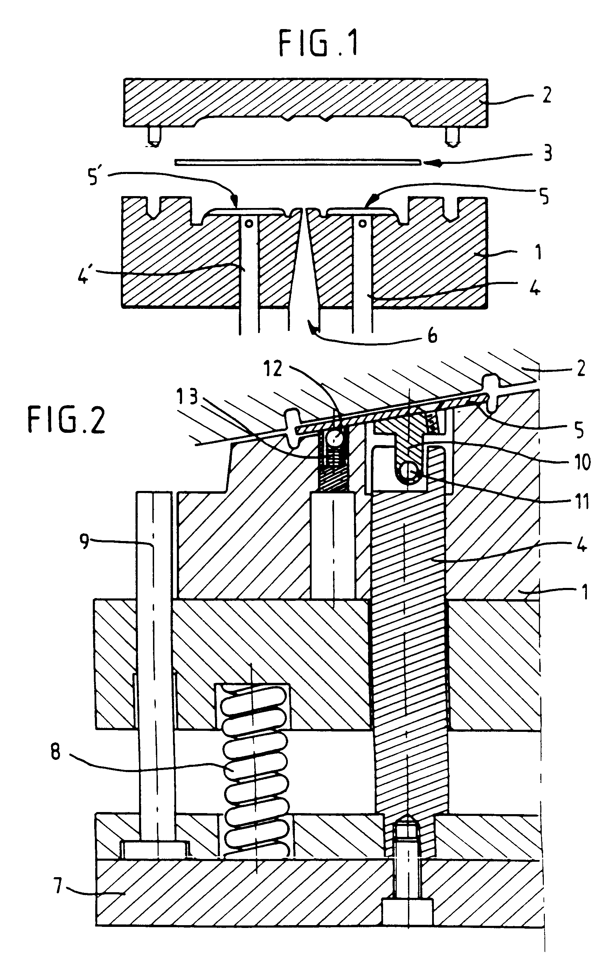

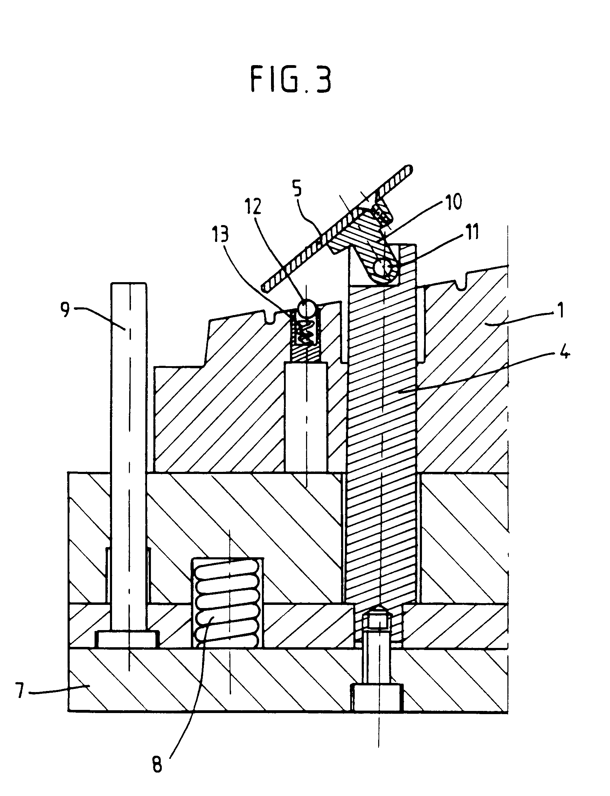

La figure 1 est un schéma de principe en coupe transversale d'un moule selon l'invention; la figure 2 est une vue en coupe, à plus grande échelle, d'une portion de la partie fixe du moule en position de fermeture et d'injection et la figure 3 est analogue à la figure 2, pour la position d'ouverture du moule et d'éjection de la pièce moulée.

Le moule représenté à la figure 1 comporte une partie fixe 1 et une partie mobile 2. Un film décoratif 3 est disposé dans le plan de joint entre les parties 1 et 2 du moule et défile transversalement au plan de la figure. Deux coulisseaux 4 et 4' sont disposés dans la partie fixe 1 du moule et comportent chacun, à leur extrémité libre, une plaquette de rainage 5 et 5' montée pivotante. Un canal d'injection 6 débouche entre les plaquettes 5 et 5' dans la cavité de moulage ménagée entre les parties 1 et 2 du moule.

Les coulisseaux 4 et 4' sont solidaires d'une plaque d'éjection 7 (figures 2 et 3) soumise à l'action de ressorts 8 et portant également des éjecteurs 9 agissant à l'extérieur des plaquettes 5 et 5', de préférence sous les tenons de la façade de lunette.

Les plaquettes de rainage 5, 5' sont visées chacune sur un support 10 lui-même pivotant sur les coulisseaux 4, 4' autour d'un axe 11. Chacune des plaquettes 5, 5' est en outre chargée par une bille 12 à ressort 13 coulissant dans la partie fixe 1 du moule. La bille 12 sert d'amortisseur pour la plaquette lors de la fermeture du moule et sauvegarde ainsi l'état de surface arrière de la plaquette de rainage. En outre, des picots de centrage (non représentés) logés sur la partie fixe 1 du moule assurent un meilleur positionnement du système de rainage lors de la fermeture du moule.

Préalablement à la fermeture du moule, des moyens (non représentés), tels que ressort ou vérin, ramènent les plaquettes 5, 5' en position d'injection, c'est-à-dire la position des plaquettes dans la figure 2.

On peut constater que, dans le moule de l'invention, avant sa fermeture, aucune pièce mécanique ne fait saillie au-delà des plaquettes 4, 4', qu'il s'agisse du système d'injection, des systèmes d'ouverture et fermeture du moule, des moyens d'éjection de la pièce moulée ou du système de déchaussage des rainures.

Lors de l'ouverture du moule, la plaque d'éjection 7 se rapproche de la partie fixe 1 du moule en comprimant le ressort 8. La plaque 7 déplace simultanément les coulisseaux 4, 4' et les éjecteurs 9. Au cours de ces déplacements, les plaquettes de rainage 5, 5' pivotent autour de leur axe 11 respectif et se mettent en biais en sortant de la rainure ou drageoir qu'elles ont formé dans la façade de lunette, avec l'assistance des billes à ressort 12, 13. Les éjecteurs 9 assurent l'éjection de cette façade.

## Revendications

1. Moule d'injection plastique pour la fabrication de lunettes décorées par la technique dite du film (3) dans le moule, ledit moule comportant une partie fixe (1) et une partie mobile (2) séparées par un plan de joint,
caractérisé en ce qu'il comporte deux plaquettes de rainage mobiles (5, 5') qui sont chacune montées pivotantes sur un coulisseau (4, 4') disposé dans la partie fixe (1) du moule, chacune desdites plaquettes (5, 5') étant soumise à l'action d'une butée (12) à ressort (13) logée dans la partie fixe (1) du moule, ainsi qu'à des moyens de rappel en position d'injection préalablement à la fermeture du moule, l'injection de matière se faisant par un canal (6) disposé dans la partie fixe (1) du moule et débouchant entre les deux plaquettes (5, 5'), des éjecteurs (9) étant montés dans la partie fixe (1) du moule.

2. Moule d'injection selon la revendication 1,
caractérisé en ce que les éjecteurs (9) sont situés sous les tenons de la façade de lunette.

3. Moule d'injection selon l'une des revendications 1 et 2,
caractérisé en ce que les butées à ressort sont des butées à bille (12).

4. Moule d'injection selon l'une des revendications 1 à 3,
caractérisé en ce que la partie fixe (1) du moule comporte des picots de positionnement des plaquettes de rainage (5, 5').

## Claims

1. Plastics injection mould for the manufacture of decorated spectacles by means of the technique known as film (3) in the mould, said mould comprising a fixed portion (1) and a mobile portion (2) separated by a mould joint, characterised in that it comprises two mobile grooving plates (5, 5') each of which is pivotally mounted on a slide (4, 4') disposed in the fixed portion (1) of the mould, each of the said plates (5, 5') being subjected to the action of a stop means (12) urged by a spring (13) mounted in the fixed portion (1) of the mould, and being further subject to the action of means returning it into the injection position prior to closure of the mould, the injection of material being effected through a duct (6) disposed in the fixed portion (1) of the mould and opening between the two plates (5, 5'), ejectors (9) being mounted in the fixed portion (1) of the mould.

2. Injection mould according to claim 1, characterised in that the ejectors (9) are located underneath the stubs of the facade of the spectacles.

3. Injection mould according to one of claims 1 and 2, characterised in that the sprung stop means are thrust ball bearings (12).

4. Injection mould according to one of claims 1 to 3, characterised in that the fixed portion (1) of the mould comprises positioning pins for the grooving plates (5, 5').

## Patentansprüche

1. Form zum Spritzgießen von Kunststoff zur Herstellung dekorierter Brillen nach der sogenannten Technik der Folie (3) in der Form, wobei diese Form einen feststehenden Teil (1) und einen beweglichen Teil (2) umfaßt, die durch eine Formteilebene voneinander getrennt sind, **dadurch gekennzeichnet,** daß sie zwei bewegliche Nutplatten (5, 5') umfaßt, die jeweils schwenkbar an einem im feststehenden Teil (1) der Form angeordneten Stößel (4, 4') angebracht sind, wobei jede der besagten Platten (5, 5') der Einwirkung eines im feststehenden Teil (1) der Form eingesetzten Anschlags (12) mit Feder (13) ausgesetzt ist, sowie Mitteln zur Rückstellung in Einspritzposition vor dem Schließen der Form, wobei das Einspritzen der Formmasse durch einen Kanal (6) erfolgt, der im feststenden Teil (1) der Form angeordnet ist und zwischen den beiden Platten (5, 5') einmündet, und wobei Auswerfer (9) im feststehenden Teil (1) der Form angeordnet sind.

2. Spritzgußform nach Anspruch 1, **dadurch gekennzeichnet,** daß sich die Auswerfer (9) unter den Zapfen der Brillenvorderseite befinden.

3. Spritzgußform nach einem der Ansprüche 1 und 2, **dadurch gekennzeichnet,** daß es sich bei den Federanschlägen um Kugelanschläge (12) handelt.

4. Spritzgußform nach einem der Ansprüche 1 bis 3, **dadurch gekennzeichnet,** daß der feststehende Teil (1) der Form Positionierspitzen für die Nutplatten (5, 5') umfaßt.
